# FASCICULE DE BREVET EUROPEEN

(11) **EP 0 774 578 B1**
(45) Date de publication et mention de la délivrance du brevet: **23.10.2002**
(21) Numéro de dépôt: 96402429.3
(22) Date de dépôt: 14.11.1996
(51) Int. Cl.: F02K 1/60

(54) **Inverseur de poussée de turboréacteur à obstacles aval tendant à l'équilibrage**
Schubumkehrvorrichtung für ein Strahltriebwerk wobei die Umkehrklappen in eine geschlossene Stellung gedrückt werden
Thrust reverser for a turbojet where the reversing shells are balanced to stay in the closed position

(30) Priorité: 15.11.1995 FR 9513506
(43) Date de publication de la demande: 21.05.1997
(73) Titulaire: HUREL-HISPANO LE HAVRE, 76700 Harfleur (FR)
(72) Inventeur: Lardy, Pascal, 76610 Le Havre (FR); Valleroy, Laurent Georges, 76600 Le Havre (FR); Vauchel, Guy Bernard, 76610 Le Havre (FR)
(74) Mandataire: Berrou, Paul

(56) Documents cités:
- EP-A- 0 574 730
- WO-A-93/16279
- WO-A-96/38661
- FR-A- 2 601 077
- GB-A- 1 524 741
- GB-A- 2 075 447
- US-A- 2 847 823
- US-A- 3 531 049
- US-A- 5 390 879

## Description

La présente invention concerne un inverseur de poussée à obstacle aval destiné à être installé sur des moteurs d'avions de type turboréacteur à double ou simple flux.

Habituellement, les inverseurs montés en aval du moteur ont la double fonction :
- de réaliser la tuyère d'éjection en mode jet direct
- de réaliser l'inversion en mode jet inversé.

Ces inverseurs sont en fait des inverseurs dits "target" ou "à coquilles" et sont équipés de deux coquilles montées pivotantes sur la structure fixe de l'inverseur.

Ces inverseurs de poussée ont l'avantage d'être relativement simples et légers. La cinématique est simple. Les coquilles réalisent la tuyère du moteur en jet direct et constituent les obstacles qui permettent d'inverser le flux en jet inversé.

On connaît des structures d'éjection à inverseur de poussée à portes basculantes comme par exemple représenté par le brevet US 4 005 836 et dont la manoeuvre d'ouverture est assurée par un système à barres qui assurent le soulèvement des portes et leur basculement vers l'arrière.

On connaît un autre type d'inverseur à obstacles aval à pivot fixe comme par exemple représenté par les brevets FR 2 348 371 et US 3 550 855 et dont les pivots sont installés en aval des portes pour assurer un éloignement suffisant desdites portes par rapport à la sortie d'éjection du moteur en mode jet inversé.
US 2.847.823 montre un inverseur à obstacles aval comportant un anneau arrière fixe.

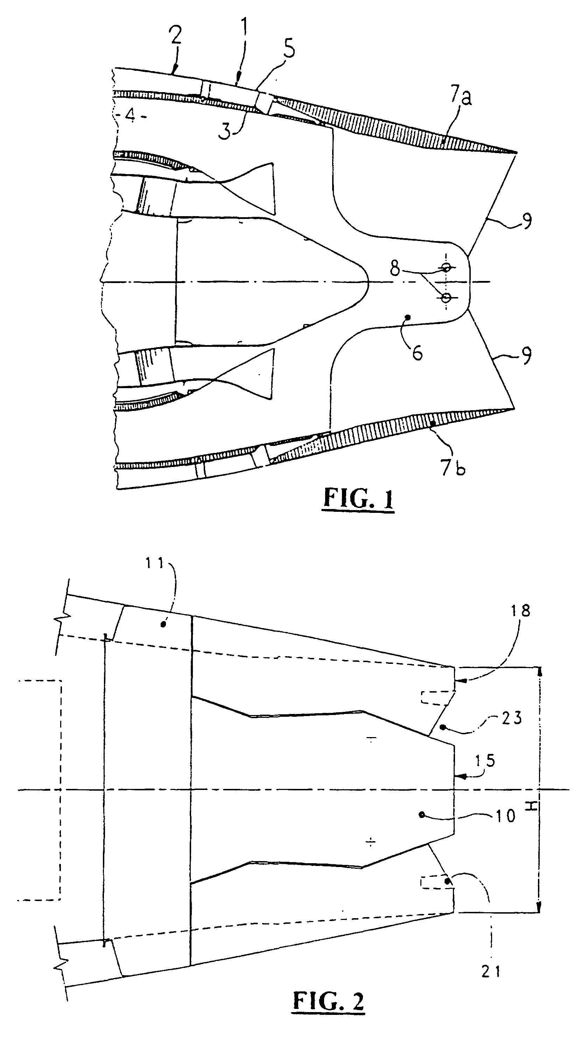

La figure 1 des dessins annexés montre un exemple de réalisation de ce type connu d'inverseur de poussée.

L'inverseur de poussée est constitué dans ce cas d'une structure fixe amont 1 fixée sur le turboréacteur 2 ou sa nacelle et comportant une paroi interne 3 délimitant extérieurement le canal annulaire de circulation de la veine fluide, un carénage externe 5 fixé sur la paroi interne 3 et deux structures latérales 6. Deux obstacles aval ou coquilles 7a et 7b sont montés pivotants sur la structure fixe, notamment au moyen de pivots 8 portés par les structures latérales 6 qui supportent également un système de commande des déplacements et de verrouillage des obstacles 7a et 7b. L'extrémité aval 9 des obstacles 7a et 7b constituent le bord de fuite de la paroi externe, en prolongement vers l'aval du carénage 5, n'est pas coplanaire.
Ces inverseurs ont l'inconvénient majeur en position jet direct d'avoir des portes fortement auto-ouvrantes.
De plus, la découpe aval des portes est non coplanaire. Le volume nécessaire pour le logement des barres ou pour le logement des pivots oblige à avoir des bossages latéraux et des dépassements vers l'aval de la nacelle. La conséquence est une détérioration des caractéristiques aérodynamiques en jet direct.
L'objet de l'invention est de proposer un moyen qui permette de réduire fortement voire de supprimer l'auto-ouverture des coquilles et/ou de réduire l'effet des pertes aérodynamiques en sortie de tuyère.
Un inverseur de poussée de turboréacteur à obstacles aval du type précité permettant de répondre à ces conditions est caractérisé en ce que le joint d'étanchéité a un cheminement déterminé pour assurer une réduction de l'action du flux en jet direct sur la partie amont par rapport à l'action exercée sur la partie aval de coquille, de manière à donner auxdites coquilles en jet direct une tendance à l'auto-fermeture, en maintenant les coquilles dans la position non déployée qui devient une position stable.

Avantageusement, l'extrémité aval des poutres est alignée avec l'extrémité des coquilles et les surfaces extérieures de poutre sont comprises dans les lignes de nacelle. En fonction de certaines applications particulières, un anneau fixe arrière peut être adjoint.

D'autres caractéristiques et avantages de l'invention seront mieux compris à la lecture de la description qui va suivre des modes de réalisation de l'invention, en référence aux dessins annexés sur lesquels :
- la figure 1 précédemment décrite représente une vue schématique en coupe longitudinale par un plan passant par l'axe de rotation de la partie arrière d'un turboréacteur équipé d'un inverseur de poussée à obstacles aval de type connu;
- la figure 2 représente une vue générale de l'inverseur suivant un mode de l'invention en position jet direct ;
- la figure 3 représente dans une vue analogue à celle de la figure 1 un inverseur en position jet direct selon le mode de l'invention de la figure 2 ;
- la figure 4 représente le mode de réalisation de l'invention représenté à la figure 3 en mode jet inversé ;
- la figure 5 représente la section VV dans l'axe pivot en mode jet direct ;
- la figure 6 représente la section VI VI montrant la hauteur de la poutre ;
- la figure 7 représente dans une vue analogue à celle de la figure 1 un autre mode de l'invention en position jet direct ;
- la figure 8 représente une vue de l'arrière de la nacelle en jet inversé selon le mode de réalisation de l'invention de la figure 7 ;
- la figure 9 représente dans une vue analogue de la figure 1 un inverseur en position jet direct selon le mode de l'invention de la figure 7 ;
- la figure 10 représente un mode de réalisation de l'invention décrit suivant la figure 9 en mode jet inversé.

Les figures 2 à 4 représentent un inverseur de poussée conforme à l'invention. Une poutre 10 solidaire de la structure fixe 11 dont la partie amont, de manière similaire à la réalisation antérieure connue et précédemment décrite en référence à la figure 1, est fixée en 12 du côté amont sur un carter externe 13 enveloppant le turboréacteur associé. Dans l'exemple d'application représenté sur les dessins, ledit turboréacteur est à double flux et le carter 13 constitue la paroi externe du passage circulaire d'écoulement des gaz. La structure fixe 11 est ainsi disposée dans le prolongement du carter 13 vers l'aval et constitue une partie du passage circulaire d'écoulement des gaz et une partie de la nacelle externe.

La poutre 10 constitue une partie de la paroi externe 14 du passage circulaire d'écoulement des gaz et une partie de la nacelle externe. L'extrémité aval 15 de la poutre 10 constitue une partie de la section de tuyère d'échappement des gaz de la nacelle.

Les coquilles 16 sont articulées autour des points de rotation fixe 19, solidaires de la poutre 10.

Les coquilles 16 sont manoeuvrées par un système mécanique 20 logé dans ladite poutre 10. Ledit système, non représenté en détail sur les figures, peut être hydraulique, pneumatique ou électrique, tirant ou poussant, d'un type connu en soi. Le brevet FR 2 704 907 montre un exemple de réalisation utilisable.

Un autre point appréciable d'un tel emplacement est d'avoir toute la structure du système protégée du flux chaud en jet inversé et de n'avoir aucune pièce du système dans le flux en jet inversé.

L'ensemble pivotant en jet direct étant très peut auto-ouvrant voire équilibré ou auto-fermant, la structure même du système peut être allégée par rapport aux systèmes utilisés habituellement.

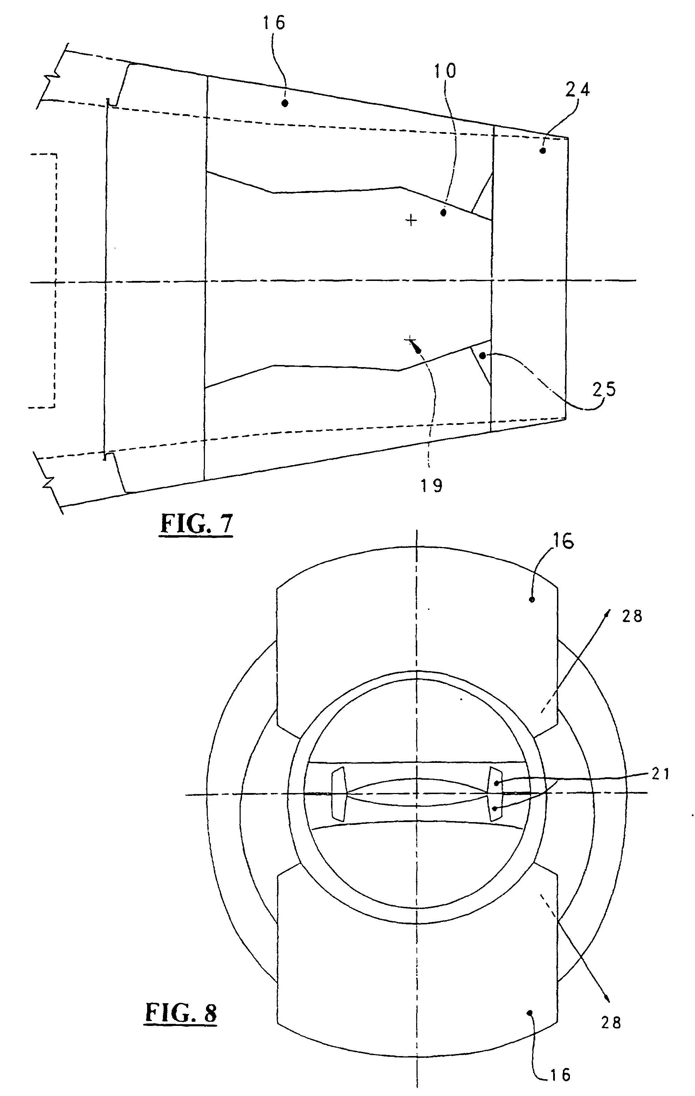

En mode jet inversé, les coquilles 16 viennent en contact l'une sur l'autre par l'intermédiaire de butées 21 intégrées ou rapportées aux coquilles 16 comme montré sur la figure 8

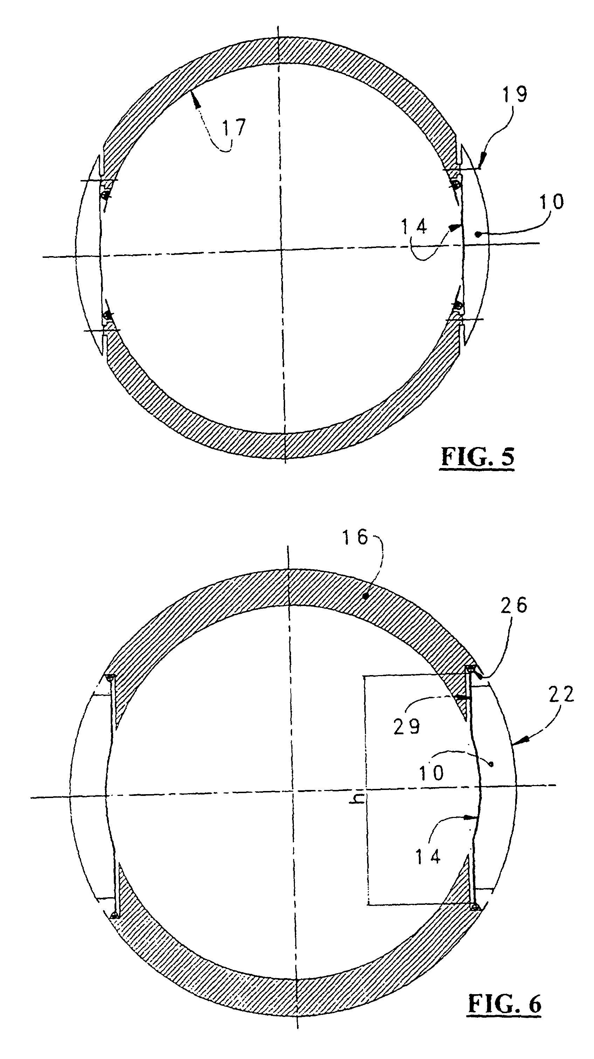

Pour tendre vers l'équilibrage, le point d'articulation 19 de la coquille 16 doit être situé environ au centre de poussée de la paroi interne 17 de la coquille 16. Les performances aérodynamiques en jet inversé étant liées à la section de renvoi du flux vers l'amont de la nacelle, et le point d'articulation 19 de la coquille 16 devant venir le plus en amont possible, conduisent à écarter d'autant ledit point d'articulation de l'axe longitudinal de l'inverseur vers l'externe de la nacelle. Cette disposition amène à utiliser des poutres 10 dites larges comme montré sur la figure 6.

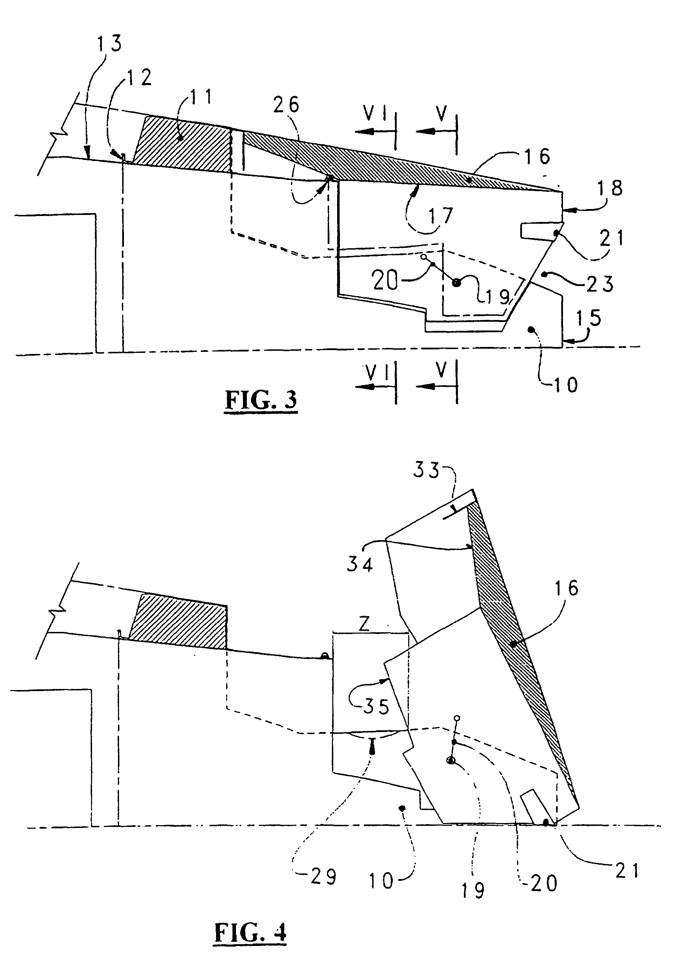

Le rapport de la hauteur latérale (h) d'éjection du flux ou largeur de poutre, dans la zone (Z) suivant la figure 4, sur la valeur (H) de la sortie d'éjection est de O,6 mini.

Le fait que les poutres 10 soient larges permet d'obtenir une meilleure stabilité de l'ensemble fixe et mobile. Le galbe étendu 22 des parties externes des poutres, leur donne une grande inertie et procure une meilleure tenue structurale de l'inverseur. Cette disposition garantit de plus une section d'éjection stable.

Le fait que le point d'articulation 19 de la coquille 16 soit situé le plus en amont possible permet en utilisant l'épaisseur de la nacelle à cet endroit de ne pas avoir recours à un carénage de la poutre venant en débordement des lignes et en prolongement en aval de la nacelle comme montré dans le brevet US 4 005 836. Bien sur un léger renflement peut être appliqué sans pour autant perturber, au-delà du raisonnable, les performances.

Une autre caractéristique remarquable de la poutre 10 dite large, comme montré sur figure 8, est de mieux canaliser les flux d'éjection comme représenté par l'exemple des flèches 28, ce qui évite d'impacter la carlingue dans le cas d'une installation sur fuselage. Cette caractéristique n'est pas assurée sur les brevets US 4 005 836 et FR 2 348 371 donnés en exemple.

Sur les figures 4 et 6, un exemple de définition du détourage de la paroi interne 29 de la poutre 10, montre la possibilité de piloter les nappes latéralement, en mode jet inversé, dans les directions souhaitées. Cette configuration peut être réalisée par festonnage, comporter un retour de bord, avoir une paroi courbe incurvée ou tout autre solution permettant à l'homme de l'art d'obtenir l'effet et la direction désirés. La direction du flux pouvant même être redirigée vers l'interne 17 de la coquille 16.

Le cheminement du joint 26 pour favoriser la tendance à l'auto-fermeture se situe le plus au bord possible de la structure fixe 11, comme montré sur la figure 3, pour la zone en amont du point de rotation 19 de la coquille 16, et le plus au bord possible de la coquille 16 pour la zone en aval du point de rotation 19 de la coquille. L'installation dudit joint pouvant être faite, soit sur la structure fixe 11 et la poutre 10, soit sur la coquille 16.

Les bords latéraux des coquilles 16 situés en aval comportent des découpes 23 permettant aux coquilles de débattre et de venir en vis à vis en mode d'inversion.

Ces découpes sont principalement dimensionnées en fonction de l'angle d'ouverture des coquilles 16, de la position des points d'articulation 19 et des lignes de nacelle.

En position jet direct, hormis ces découpes 23, le bord aval 15 de la poutre 10 et le bord aval 18 de la coquille 16 étant alignés et dans les mêmes lignes, il en résulte une perte aérodynamique fortement réduite.

Les coquilles 16 associées à un système d'entraînement 20 adapté peuvent présenter des angles d'ouverture différents. Les bords latéraux 35 des coquilles 16 peuvent être de détourages non symétriques entre-eux. Le becquet 33 et la cavité 34 peuvent présenter des configurations variées. L'ensemble de ces paramètres pris individuellement ou associés entre eux, permet d'aboutir à un pilotage de nappes optimal en mode jet inversé.

Un autre mode de réalisation de l'invention montré sur la figure 7 représente un concept comportant des lignes nacelles allongées. Une fois que le positionnement des coquilles 16 et que la position des points de rotation 19 sont définis, ces deux caractéristiques assurant les performances d'inversion attendues, un anneau arrière 24 positionné à l'aval des coquilles permet de terminer la nacelle dans les lignes sans toucher aux performances d'inversion imposée.

L'anneau arrière 24 peut être rapporté, monobloc ou constitué de plusieurs éléments, aux poutres 10 ou bien intégré avec elles.

Il peut comporter quatre oreilles 25 permettant d'obstruer les découpes 23 des coquilles 16 en jet direct. Elles peuvent être rapportées ou intégrées.

L'étanchéité est assurée par un joint 27 associé au joint 26, l'ensemble pouvant faire partie d'un même ensemble, sur la coquille 16. L'installation dudit joint pouvant être faite, soit sur l'anneau arrière 24, soit sur l'aval de la coquille 16.

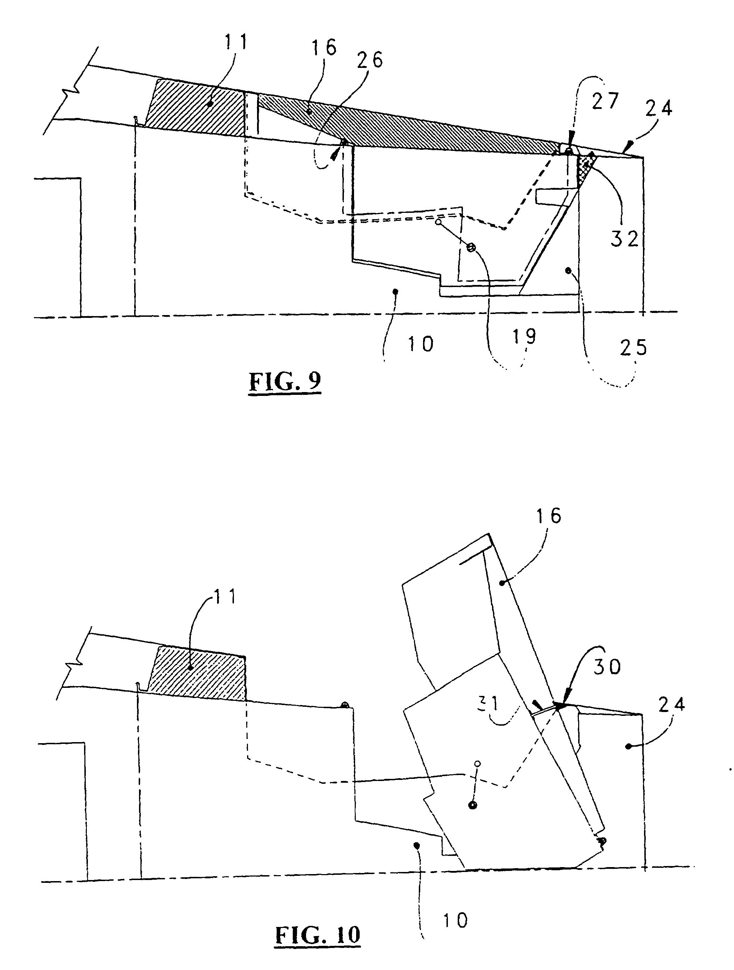

La figure 10 montre une réalisation d'un mode de butée de fin d'ouverture de la coquille 16 associée à l'invention. L'extrémité amont de l'anneau arrière 24 comporte un ou plusieurs points de butée 30 venant en contact sur un ou plusieurs renforts 31 de la coquille 16. Ce ou ces contact(s) se situe(nt) dans une zone comprise entre les deux bords latéraux du détourage amont 30 de l'anneau arrière 24. Dans cette configuration, toute liberté est offerte pour obtenir un réglage des fuites entre les coquilles 16 en mode jet inversé.

La figure 9 montre une autre particularité concourant à l'auto-fermeture des coquilles 16 en jet direct. Le bord aval de la coquille 16 est allongé suivant la définition de la zone 32. Cette augmentation de la surface aval de la coquille 16 permet d'augmenter l'effort résultant, engendré par le flux circulant dans le passage d'écoulement des gaz, dans le sens de l'auto-fermeture de la coquille 16.

## Revendications

1. Inverseur de poussée de turboréacteur comportant des éléments déplaçables ou obstacles formés de coquilles (16) susceptibles lors du fonctionnement du turboréacteur en poussée directe de s'intégrer à la paroi externe du canal d'éjection du turboréacteur et, en position déployée, de constituer des obstacles de déviation du flux des gaz en procurant une inversion de poussée, lesdites coquilles (16) étant montées pivotantes autour d'axes de rotation (19) portés par des poutres latérales fixes (10) qui supportent également un système de commande (20) des déplacements des coquilles (16), et les poutres (10) de support des coquilles (16) sont larges sur toute leur longueur, la largeur des poutres en amont de l'axe pivot étant supérieure à l'entraxe des pivots, le rapport de la largeur de poutre sur la longueur de sortie d'éjection dans un plan passant par les pivots étant au moins de 0,60 et les axes fixes ou pivots (19) de rotation des coquilles (16), solidaires des poutres (10) sont contenus dans les lignes de nacelle et sont situés au centre de poussée de la paroi interne (17) de chaque coquille respectivement, de manière à donner auxdites coquilles (16) en jet direct une tendance à l'équilibrage, **caractérisé en ce que** le joint d'étanchéité (26) disposé entre coquilles (16) et partie fixe d'inverseur a un cheminement déterminé, étant situé au bord de la structure fixe (11) pour la zone en amont de l'axe de rotation (19) de la coquille (16) et au bord de la coquille (16) pour la zone en aval de l'axe de rotation (19) de la coquille (16), et le cheminement de joint (26) étant situé au dessus de l'axe pivot (19) en position de jet direct, de manière à assurer une réduction de l'action du flux en jet direct sur la partie amont par rapport à l'action exercée sur la partie aval de la coquille (16), et à donner auxdites coquilles (16) en jet direct une tendance à l'auto-fermeture, en maintenant les coquilles (16) dans la position non-déployée qui devient une position stable.

2. Inverseur de poussée de turboréacteur selon la revendication 1 dans lequel l'extrémité aval (15) des poutres (10) et l'extrémité aval (18) des coquilles (16), sont alignées et les surfaces extérieures de poutre (10) sont comprises dans les lignes de nacelle et se termine en profil fin d'extrémité aérodynamique de nacelle.

3. Inverseur de poussée de turboréacteur selon l'une des revendications 1 ou 2 dans lequel la paroi interne (29) de la poutre (10) comporte un détourage déterminé adapté à un pilotage latéral des nappes du flux inversé.

4. Inverseur de poussée de turboréacteur selon l'une quelconque des revendications 1 à 3 dans lequel les coquilles (16) présentent une configuration différente l'une par rapport à l'autre.

5. Inverseur de poussée de turboréacteur selon l'une quelconque des revendications 1 à 4 comportant un anneau arrière fixe (24) disposé à l'aval des coquilles (16) et portant des oreilles (25) obstruant en jet direct les cavités créées par les découpes (23) des coquilles (16) dans lequel l'anneau arrière (24) comporte en zone amont des butées (30) venant en contact, en position de jet inversé, avec des éléments coopérants (31) de la coquille (16).

6. Inverseur de poussée de turboréacteur selon la revendication 5 dans lequel la surface aval de la coquille (16) est augmentée d'une partie (32) masquée par l'anneau arrière (24) de manière à favoriser l'auto-fermeture des coquilles (16) en jet direct.

## Claims

1. Turbojet thrust reverser comprising moveable elements or obstacles formed of shells (16) capable, when the turbojet is operating in direct thrust mode, of incorporating into the outer wall of the turbojet jet pipe and, in the deployed position, of constituting obstacles which deflect the flow of the gases, reversing the thrust, the said shells (16) being mounted so that they can pivot about rotational axles (19) carried by fixed lateral spars (10) which also support a system (20) controlling the movements of the shells (16), and the spars (10) supporting the shells (16) are wide along their entire length, the width of the spars upstream of the pivot axle being greater than the distance between pivots, the ratio of the spar width to the ejection outlet length in a plane passing through the pivots being at least 0.60 and the fixed axles or pivots (19) about which the shells (16) rotate, secured to the spars (10), are contained in the cowling lines and are situated at the centre of thrust of the internal wall (17) of each shell respectively, so as to give the said shells (16) in direct thrust mode a tendency to balance, **characterized in that** the seal (26) arranged between shells (16) and reverser fixed part has a determined path, being situated at the edge of the fixed structure (11) in the case of the region upstream of the rotation axle (19) of the shell (16) and at the edge of the shell (16) in the case of the region downstream of the rotation axle (19) of the shell (16), and the path of the seal (26) being situated above the pivot axle (19) in the direct jet position, so as to reduce the action of the flow in direct jet mode on the upstream part with respect to the action exerted on the downstream part of the shell (16), and so as to give the said shells (16), in direct jet mode, a tendency to self-close, keeping the shells (16) in the undeployed position which becomes a stable position.

2. Turbojet thrust reverser according to Claim 1, in which the downstream end (15) of the spars (10) and the downstream end (18) of the shells (16) are aligned and the outer surfaces of the spar (10) lie within the cowling lines and end in a slender cowling aerodynamic end profile.

3. Turbojet thrust reverser according to either of Claims 1 and 2, in which the internal wall (29) of the spar (10) has a determined end portion designed to guide the layers of the reversed flow laterally.

4. Turbojet thrust reverser according to any one of Claims 1 to 3, in which the shells (16) have different configurations from one another.

5. Turbojet thrust reverser according to any one of Claims 1 to 4, comprising a fixed rear ring (24) arranged downstream of the shells (16) and bearing lugs (25) which, in direct jet mode, obstruct the cavities created by the cutouts (23) of the shells (16) in which the rear ring (24) has, in an upstream zone, stops (30) which, in the reverse jet mode, come into contact with collaborating elements (31) belonging to the shell (16).

6. Turbojet thrust reverser according to Claim 5, in which the downstream surface of the shell (16) is increased by a part (32) concealed by the rear ring (24) so as to encourage the self-closing of the shells (16) in direct jet mode.

## Patentansprüche

1. Schubumkehrvorrichtung für ein Turbotriebwerk mit verschiebbaren Elementen oder Umkehrklappen, die aus Schalen (16) bestehen, die geeignet sind, sich im Direktschubbetrieb des Turbotriebwerks in die Außenwand des Ausstoßkanals des Turbotriebwerks einzufügen und in ausgeklappter Stellung Umlenkhindernisse für den Strom der Gase zu bilden, wobei sie eine Schubumkehr bewirken, wobei die genannten Schalen (16) um Drehachsen (19) schwenkbar angebracht sind, welche an feststehenden seitlichen Trägern (10) sitzen, die auch ein Steuersystem (20) für die Bewegungen der Schalen (16) halten, und die Träger (10) der Schalen (16) sind über ihre gesamte Länge breit geformt, wobei die Breite der Träger vor der Drehachse größer ist als der Achsabstand der Drehzapfen, wobei das Verhältnis der Trägerbreite zur Ausstoßausgangslänge in einer durch die Drehachsen verlaufenden Ebene mindestens 0,60 beträgt, wobei die feststehenden Achsen oder Drehachsen (19) der Schalen (16), die mit den Trägern (10) fest verbunden sind, in den Linien der Triebwerksgondel enthalten sind und sich im Schubzentrum der Innenwand (17) der jeweiligen Schale (16) befinden, wodurch diese Schalen (16) im Direktstrahlbetrieb ins Gleichgewicht streben,
**dadurch gekennzeichnet,**
**dass** die Dichtung (26), die zwischen Schalen (16) und feststehendem Teil der Schubumkehrvorrichtung angeordnet ist, eine bestimmte Lage aufweist, indem sie in dem Bereich vor der Drehachse (19) der Schale (16) am Rand des feststehenden Aufbaus (11) sitzt und in dem Bereich hinter der Drehachse (19) der Schale (16) am Rand der Schale (16) sitzt, und die Führung der Dichtung (26) in Direktstrahlposition über der Drehachse (19) verläuft, so dass die Einwirkung des Stroms im Direktstrahlbetrieb auf den vorderen Teil im Verhältnis zu der auf den hinteren Teil der Schale (16) ausgeübten Einwirkung verringert wird, und dass diese Schalen (16) im Direktstrahlbetrieb die Tendenz zum Selbstschließen bekommen, wobei die Schalen (16) in der nicht ausgeklappten Stellung gehalten werden, die eine stabile Stellung wird.

2. Schubumkehrvorrichtung für ein Turbotriebwerk nach Anspruch 1, wobei das hintere Ende (15) der Träger (10) und das hintere Ende (18) der Schalen (16) aufeinander ausgerichtet sind und die äußeren Oberflächen der Träger (10) sich in den Linien der Gondel befinden und in dem aerodynamischen Endprofil der Gondel enden.

3. Schubumkehrvorrichtung für ein Turbotriebwerk nach einem der Ausprüche 1 oder 2, wobei die Innenwand (29) des Trägers (10) eine bestimmte Umlenkung aufweist, die für eine seitliche Führung der Umkehrströme geeignet ist.

4. Schubumkehrvorrichtung für ein Turbotriebwerk nach einem der Ansprüche 1 bis 3, wobei die einzelnen Schalen (16) eine sich voneinander unterscheidende Konfiguration aufweisen.

5. Schubumkehrvorrichtung für ein Turbotriebwerk nach einem der Ansprüche 1 bis 4 mit einem feststehenden hinteren Ring (24), der hinter den Schalen (16) angeordnet ist und Anhängsel (25) aufweist, die im Direktstrahlbetrieb die Hohlräume verschließen, die durch die Ausschnitte (23) der Schalen (16) entstehen, wobei der hintere Ring (24) im vorderen Bereich Anschläge (30) aufweist, die in der Umkehrschubstellung mit kooperierenden Gegenelementen (31) der Schale (16) in Kontakt kommen.

6. Schubumkehrvorrichtung für ein Turbotriebwerk nach Anspruch 5, wobei die hintere Oberfläche der Schale (16) um einen Teil (32) vergrößert wird, der von dem hinteren Ring (24) abgedeckt wird, so dass das Selbstschließen der Schalen (16) im Direktstrahlbetrieb begünstigt wird.
